# EUROPEAN PATENT APPLICATION

(11) **EP 1 619 043 A2**
(43) Date of publication of application: **25.01.2006**
(21) Application number: 05076029.7
(22) Date of filing: 02.05.2005
(51) Int. Cl.: B60B 1/04, B60B 21/06

(54) **Spoked wheel with rim for use with a tubeless tyre, particularly for motorcycles and automobiles**

(30) Priority: 19.07.2004 IT BO20040448
(71) Applicant: Fa-Ba S.r.l., 40050 Monte S. Pietro (BO) (IT)
(72) Inventor: Barioni, Marco, 40050 Monte s. Pietro (BO) (IT)
(74) Representative: Riccardi, Sergio

(57) **Abstract**

The theme of the invention entitled spoked wheel with rim for use with a tubeless tyre, particularly for motorcycles and automobiles consists of a rim with holes along the circumference that are specially designed not only for housing nipples but also for closure plugs with sealing rings. Each single plug is threaded in a way that it can be engaged in a corresponding threading of the hole; by screwing it in, it compresses the sealing ring with a measured torque. The sealing ring in turn is positioned between the head of the threaded plug and the seat in the hole consisting of a special counterbore. The distance between the nipple and the plug is calibrated so they do not come in contact and bump into each other.

## Description

The theme of the present industrial invention is spoked wheels for motorcycles or automobiles, with rims to be used with tubeless-type tyres, or those without a tube. Currently, a tubeless tyre can be mounted exclusively on integral wheels, or monolithic ones, and not on spoked wheels, due to the presence of holes on the rims of the latter. To better understand the characteristics of the invention, following is a brief description of the constitution of spoked wheels. A spoked wheel is made up by a hub, a rim and spokes that act as connecting elements between the two, leaving out the pairing of the spokes with the hub, that is not dealt with here, that between the spokes and the rim is carried out as follows: the rim contains, along with the hole for the tyre's air valve, the pass-through holes located along the circumference, one for each spoke; each one of these holes is the housing for the coupling element with a single spoke, or the nipple. The coupling between the spoke and the nipple is a threaded type, with screw on the extremity of the spoke and the nut screw of the nipple. Therefore this nipple enters into the hole of the rim and during the rotation of the wheel on the ground, due to the direct coupling with the spoke, it is subject to oscillating movements and vibrations along its axis, inside the hole itself. And it is the movement of the nipple inside the hole that makes the spoked wheel particularly elastic and more resistant compared to a monolithic wheel. Along with these advantages it can be added that they are more functional, more economic and aesthetically pleasing, features that would make it preferable over a monolithic wheel. However, it is the presence of holes along the circumference that make the middle tube necessary between the rim and the tyre, that would in turn make the above-mentioned advantages futile. In fact, the tubeless tyre offers advantages of increased safety, reliability, rigidity and a reduced risk of puncturing and, in the event of the latter, a residual guarantee of road hold.

The scope of the present invention, therefore, is to overcome these difficulties by putting the advantages of a spoked wheel together with those of a tubeless tyre.

The characteristic elements of the invention were determined through a dynamic and thorough study. Or rather, as mentioned above, during the rotation of the wheel the nipple does not remain perfectly immobile in the seat but is subjected to oscillations or vibrations due to the cyclical contact of the parts of the wheel itself against the ground. Considering that with every rotation of the wheel each single nipple, connected to the spoke, is subjected to a range in one direction and another in the other direction, and considering the speed of the wheel rotation, it is construed that the nipple oscillates in the housing with a frequency that can go up to ten cycles per second. This oscillation causes second-level vibrations and beyond, and has a width or range even of a few millimetres. Therefore, two phenomenon are generated that damage the closing and sealing elements of the hole and/or causing the tyre to deflate: the first involves the possible bumping between the nipple and the closing element of the hole, the second in a pumping effect caused by the nipple that moves in the rim's hole, that in turn has an effect on the sealing element itself. These two phenomenon tend to cause leaks, even microscopic ones, which can ultimately cause the tyre to deflate even in a short amount of time. Over the long run, however, these can cause the sealing elements to vibrate resulting in premature hardening.

Today there are various solutions for pairing spoked wheels with tubeless tyres, but each one has its limitations. For example, one solution is to invert the coupling of the spoke between the rim and the hub, for which the nipple is positioned on the latter. However, this solution requires the complete redesign of the wheels and an overhaul of the mounting methods. Another solution is the use of hermetically sealed plugs for sealing the holes and, if necessary, a sealing ring to improve it. This solution however guarantees a hermetic hold only statically and not during the actual operational conditions of the wheel, which is exposed to strong dynamic stresses. Yet another solution calls for the use of sealants in the internal canal of the rim, but these, due to vibration stress, are subjected to premature wear and therefore the wheel must undergo regular and expensive maintenance procedures. Another is the elimination of the rim holes and the insertion of the nipple on the outside through additional components, but the advantages offered by automated mounting procedures currently in use are eliminated.

This present invention intends to overcome the above-mentioned limitations while allowing for the use of a tubeless tyre on wheels equipped with spoked rims, thereby allowing existing mounting systems to be used, to maintain the hermetic seal of the tyre even under dynamic conditions and therefore during actual functioning, to guarantee its hold over time without having to resort to continuous maintenance procedures. Furthermore, in the event that one wishes to substitute the wheel onto an existing means of transport, there is no need to completely eliminate the existing ones, but to keep the hub and if necessary the spokes, to change the rim, and add the attachment components along with, obviously, the tubeless tyre.

These and other scopes are reached through the device according to the invention that is characterised by being composed essentially of the following elements: a rim with deep holes along the circumference that are specially formed and crafted, with the function of housing both the nipples and, in particular, the actual closing and sealant elements, which are also part of the invention. Due to the deeper holes, therefore, the inner part of the rim, or rather the hub side, features a special protuberance; and vice versa the external part has a specially shaped rim for housing the tubeless tyre. The following closing and sealing elements of the invention are used on each single hole: a threaded plug is engaged into a corresponding hole threading and serves as a closure of the hole itself, but not a hermetic seal, and as a compression element for the seal; a hermetic sealing element consisting of a sealing ring, placed between the head of the threaded plug and the seat of the hole made by a special counterbore.

Therefore, the nipple's dynamic and oscillation problems are solved thanks to the adoption of the following solution characteristics: the nipple and the threaded plug are placed at an appropriate distance between each other and/or their facing surfaces are juxtaposed and shaped in such a way that they never come in contact with each other during the oscillation of the nipple itself. However, the vibrations and the pumping of the nipple that strikes the sealing element can cause the tyre to deflate just the same; this phenomenon is not eliminated but calls for the following constructive solution: they are designed in such a way that the sealant element is compressed by smooth and regular surfaces, found between the plug and the hole, and that between these surfaces there are no related oscillatory movements and that the compression force of these surfaces on the sealing element is calibrated and constant. These scopes are reached through the following characteristic solutions: the sealing ring is placed between the screw guide of the plug head and the counterbore of the hole; the compression force is calibrated through the threading of the plug and correspondingly to the hole, for which the torque of the screw can be properly measured and remain constant over time; the sealing ring itself and/or suitable coupling of materials of screws and nut screws, act as a system that prevents unscrewing. Therefore, through these constructive characteristics the sealing ring is free from vibratory motions that jeopardize the hold of the tyre and/or the life of the ring itself. Furthermore, the plug features special housings for the use of necessary wrenches for screwing them into the hole; these housings may be a traditional type or specially designed to reduce the size and consequently those of the hole as well as the protuberance of the rim. Furthermore, the hole of the rim is formed in a way that the closure plug doesn't interfere with the tyre during the mounting process.

An additional advantage, since the respective tightening torques between the nipple and the wheel spoke and between the plug and the hole of the rim may be different, with this solution it is also possible to respect this technical feature.

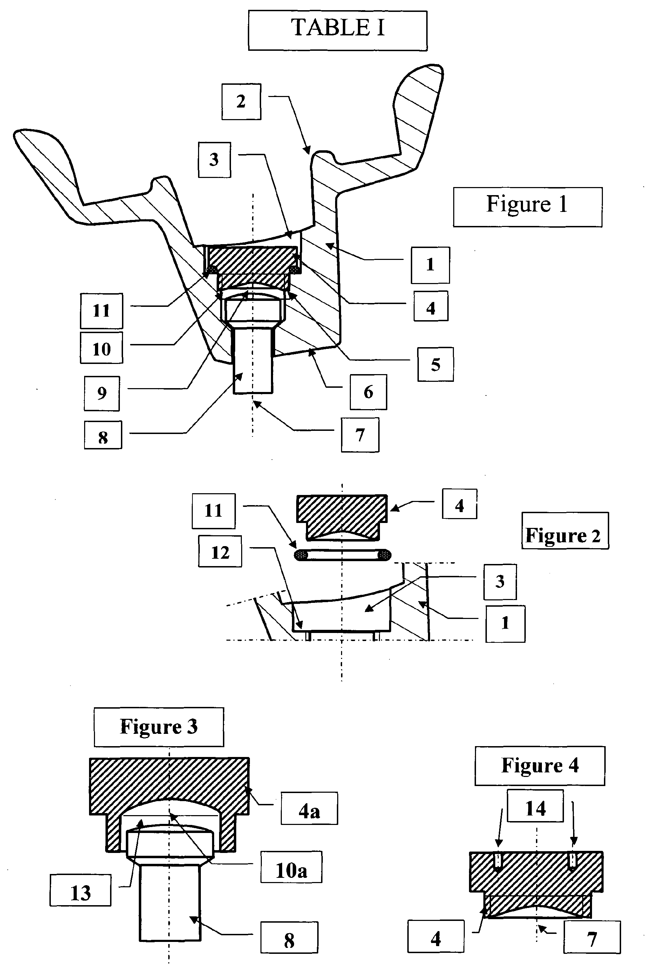

These and other characteristics will now be more evident, in relation to a simple form of execution of the invention provided simply as a guideline, unrestricted, of the capacity of the present patent, with reference to:
- Table I, Figure 1 in which section 1 was taken from the wheel rim in correspondence to the hole of the nipple housing; this section is inclined for easier representation purposes, so that the axis of the rim hole, the plug, the nipple and the wheel spoke (mentioned briefly below as axis 7) is shown vertically; actually the inclinations of axis 7 in relation to the rim follow the dictates imposed by the mechanical stress, omitted by the present invention. The following elements are represented in Figure 1: section 1 of the rim, in which we can see its external profile 2, designed to house the tubeless tyre, and its internal profile or protuberance 6, this protuberance 6 is a characteristic element since it must house, through hole 3 with its specially designed shape, not only nipple 8 but also plug 4 and the sealing element 11. Another characteristic element is threading 5 located on hole 3 and correspondingly on the shank of plug 4; the scope of this threading is to lock the plug with a precise torque, so as to restrain ring 11 with a calibrated force; furthermore, ring 11 is compressed between smooth surfaces, or in other words between the head of plug 4 and counterbore 12 of hole 3. This coupling guarantees a watertight hold. Furthermore, hole 3 is shaped to the opening in such a way that plug 4 doesn't create interference with the tyre during mounting. To prevent nipple 8 from touching plug 4 while oscillating when the wheel is in motion, a safety distance of 10 has been placed between them, and the two visible surfaces or possible contact, are specially designed so as to reduce the risk of contact.
- Table I, Figure 2 is an exploded diagram of the following elements: threaded plug 4 and sealing ring 11 as it will be compressed between plug 4 and counterbore 12 of hole 3.
- Table I, Figure 3 is a representation of nipple 8 housed in plug 4a. Due to the larger dimensions of the rim, it is possible to increase the diameter of the plug so that it is large enough to place a hole 13 in correspondence to its shank, so that nipple 8 can penetrate its interior, provided the distance 10a necessary for the range of nipple 8. The advantage of this solution is the reduction of the dimension of protuberance 6 of Figure 1.

Table I, Figure 4, is a representation of plug 4 in which the seat for the screwing wrench is not the traditional type but consists of two or more holes type 14, positioned on a concentric circumference with axis 7; therefore the wrench must have two corresponding projections engaging in holes 14 allowing for them to be screwed. The advantage consists in the reduced axis size of the plug and therefore of hole 3, and consequently of protuberance 6 of Figure 1.

## Claims

1. A spoked wheel with rim for use with a tubeless tyre, particularly for motorcycles and automobiles, which has the preferential form as shown in Table I - Figure 1, **characterised** as: possessing in correspondence to circumferential holes of the rim for the housing of nipples, not only said nipples but also true sealing elements. Furthermore, these sealing elements are **characterised** both by their special conformation and their special dimensions. In fact, the seal of tubeless tyres is compromised not only by the present holes, for which a plug would be sufficient, but by the dynamic defects caused by the wheel's motion, which reverberate on the nipples and therefore, in turn, on the closure and sealing elements on aforesaid holes. The dynamic effects caused by the vibration and oscillation of each single nipple can be summarised as follows: the width of the oscillation of a single nipple is such as to cause impact between it and the corresponding closure element of the hole and therefore breakage and/or microscopic leaks; the pumping effect that causes microscopic leaks just the same; both said effects over time cause premature hardening of the sealing element. Therefore, the characteristic elements of the present invention act so that the hold is both static and dynamic, thanks to the following realisation: the rim, provided that the external profile designed to house the tubeless tyre on the internal side has a protuberance that can bear a deeper hole that is specially formed and designed to house both the nipple and the closure plug along with the sealing ring. The nipple and the plug are located at a specified distance and have specially shaped facing surfaces, so as not to come in contact during the oscillation of the nipple. The shank of the plug and correspondingly the hole are threaded, in a way that said plug can be screwed in to compress the sealing ring with a previously established torque. The head of the plug features the seat for the screwing wrench, that can be standard, normal or special. Said sealing element is formed by a ring that is compressed between the head of the plug and a special counterbore made on the hole, in a continuous and constant way. In this way the ring is not effected by the pumping effect described above, or rather it is not effected by the dynamic vibrations and therefore not exposed to microscopic leaks or premature wear.

2. The spoked wheel with rim for use with a tubeless tyre, particularly for motorcycles and automobiles according to the preceding claims, in which the plug having larger dimensions than the nipple, features an internal seat, such as a deep hole, in order to house the nipple itself, as in Figure 3; the advantage consists in the reduction of the dimension of the internal protuberance of the rim.

3. The spoked wheel with rim for use with a tubeless tyre, particularly for motorcycles and automobiles according to the preceding claims, in which the seat on the plug for the screwing wrench is made up by a special system; for example as in Figure 4, by two or more holes located on the head in such a way that it is possible to pair them with a wrench with projections in correspondence to the holes.

4. The spoked wheel with rim for use with a tubeless tyre, particularly for motorcycles and automobiles according to the preceding claims, in which the tightening and compression system of the plug does not occur through the threading but through a bayonet coupling.

5. The spoked wheel with rim for use with a tubeless tyre, particularly for motorcycles and automobiles according to the preceding claims, in which the protuberance of the rim for housing the deep hole is continuous and runs along the entire circumference of the rim or else is formed around the individual hole.
